# EUROPÄISCHE PATENTSCHRIFT

(11) **EP 0 569 711 B1**
(45) Veröffentlichungstag und Bekanntmachung des Hinweises auf die Patenterteilung: **09.10.1996**
(21) Anmeldenummer: 93105899.4
(22) Anmeldetag: 10.04.1993
(51) Int. Cl.: C08J 7/04, C08J 11/04, C08J 7/00, C08J 5/12

(54) **Verfahren zur Vorbehandlung von zur Recyclierung vorgesehenen lackierten Kunststoffteilen**
Process for pretreating varnished plastic products assigned for recycling
Procédé de prétraitement de produits plastiques laqués destinés au recyclage

(30) Priorität: 14.05.1992 DE 4215687; 13.06.1992 DE 4219397
(43) Veröffentlichungstag der Anmeldung: 18.11.1993
(73) Patentinhaber: PEGUFORM-WERKE GMBH, D-79268 Bötzingen (DE)
(72) Erfinder: Kamprath, Axel, Dr., W-7833 Endingen (DE)
(74) Vertreter: Rackette, Karl, Dipl.-Phys. Dr.-Ing

(56) Entgegenhaltungen:
- DATABASE WPIL, Nr. 93-148 726 DERWENT PUBLICATIONS LTD., London, GB

## Beschreibung

Die Erfindung betrifft ein Verfahren zur Vorbehandlung von zur Recyclierung vorgesehenen lackierten Kunststoffteilen aus einem unpolaren Kunststoff, deren Lackschicht beispielsweise nach Vorbehandlung des Trägerkunststoffmaterials durch Beflammen, Korona-Entladung, Plasmavorbehandlung oder durch Aufbringen einer Haftvermittlerschicht auf diesem Kunststoffteil haftet.

Kunststoffteile werden aus optischen Gründen oder als Schutz gegen UV-Strahlung häufig lackiert. Während bei einigen Kunststoffarten die Lackschicht relativ problemlos aufzubringen ist, erfordern andere, insbesondere unpolare Kunststoffe (wie z. B. Polypropylen oder Polyethylen etc.) aufwendige Vorbehandlungen. Durch Beflammen, Corona-Entladung oder Plasmavorbehandlung wird die Polarität der Oberflächenschicht so weit erhöht, daß übliche Lacksysteme ausreichend auf dieser anhaften. Zusätzlich zu dieser Vorbehandlung kommen haftvermittelnde Grundierungen, sogenannte Primer, zum Einsatz. Chemisch bestehen sie aus Molekülen, die jeweils eine polare und eine unpolare funktionelle Gruppe besitzen. Die Wirkungsweise solcher Primer beruht darauf, daß sich die unpolaren Enden der Moleküle vorzugsweise an der unpolaren Kunststoff-Oberfläche des Trägermaterials orientieren und an dieser anhaften. Die polaren Gruppen sind von der Polymeroberfläche weggerichtet und stellen somit für die nachfolgende farbgebende Decklackierung einen wirkungsvollen Haftgrund dar. Die Funktion solcher Primer beruht demnach auf der Bildung einer haftvermittelnden Grenzschicht zwischen Decklack und Trägerkunststoffmaterial.

Für die direkte Wiederverwertung von derartigen lackierten Kunststoffteilen, z. B. durch Umschmelzen, werden diese eingemahlen und nach einem Verfahren der Kunststoffverarbeitung wie Spritzgießen, Blasen, Pressen etc. zu neuen Bauteilen verarbeitet. Hierbei bereiten die nun in der Kunststoffmatrix eingebetteten Lackpartikel Probleme. Aufgrund ihrer nur einseitigen Haftung am Kunststoffträgermaterial bilden sie im neuen Artikel Schwachstellen, die bei mechanischer Belastung dieses Bauteiles zum vorzeitigen Versagen führen. Ein weiterer Nachteil dieser einseitigen Haftung besteht darin, daß sich durch Ablösung der nicht mit dem Haftvermittler verbundenen Lackseite vom umgebenden Kunststoff Hohlräume bilden, die sich bei Feuchtigkeit infolge von Diffusion mit Wasser füllen. Bei nachfolgender Temperaturerhöhung, z. B. durch Sonneneinstrahlung, dehnt sich das Wasser (zum Teil unter Verdampfung) aus und bildet auf der Oberfläche Blasen, die das optische Erscheinungsbild des Bauteils stark beeinträchtigen. Eine weitere Folge der unzureichenden Haftung der Lackpartikel am Kunststoff ist das "Aufstehen" von Lackteilchen beim Beflammen als Vorbehandlung für das Lackieren des neuen Bauteiles, was ebenfalls zu einer unakzeptablen Oberflächenqualität führt.

Bisher hat man versucht, diese Nachteile auszuschließen, indem der Lack auf mechanischem Wege (z. B. durch Schmelzefiltration) oder physikalisch/chemisch (z. B. durch Anquellen, Lösen und zusätzlicher mechanischer Behandlung) entfernt wurde. Darüber hinaus, daß eine Entfernung des Lackes bei keiner dieser Methoden vollständig erfolgt und vielmehr eine Restmenge des Lackes im Kunststoff verbleibt und zu den geschilderten Effekten, wenn auch in geringerem Umfang, führt, sind diese Verfahren aufwendig, teuer und unter Umständen mit umweltschädlichen Nebenwirkungen verbunden.

Der vorliegenden Erfindung liegt daher die Aufgabe zugrunde, ein Verfahren der eingangs genannten Art so zu führen, daß die aufwendige Entfernung der Lackschicht unterbleiben kann.

Die Erfindung löst diese Aufgabe mit Hilfe der Merkmale des Patentanspruchs 1. Weitere vorteilhafte Ausgestaltungen der Erfindung sind Gegenstand der Unteransprüche.

Obwohl es in der Recyclingtechnik bisher nach Ansicht der Fachleute unumgänglich war, daß die zu recyclierenden Kunststoffe nach Art sortiert und frei von Verunreinigungen sein mußten, geht die Erfindung in gewisser Weise den entgegengesetzten Weg. Die Lackschicht wird auf der Kunststoffoberfläche belassen und ihre Oberfläche wird so präpariert, daß sie in ihrer Polarität in etwa der Polarität des Trägerkunststoffs entspricht, auf dem sie beim bzw. nach dem Umschmelzen ebenfalls haften muß.

Neben anderen denkbaren Methoden der Oberflächenmanipulation schlägt die Erfindung als vorteilhatte Verfahrensvariante vor, daß auf die polare Oberfläche der Lackschicht eine Haftvermittlerschicht aufgebracht wird, die einerseits auf der Lackschicht haftet und andererseits in der Lage ist, auf dem Trägerkunststoffmaterial zu haften.

Wie oben schon ausgeführt, hat ein derartiger Haftvermittler oder Primer die Eigenschaft, daß die unpolaren Enden der Moleküle vorzugsweise an der unpolaren Kunststoffoberfläche sich orientieren und an dieser anhaften, während die polaren Enden auf der polaren Oberfläche der Lackschicht haften.

Dabei kann man die beim Einmahlen entstehenden, von Haftvermittler freien Lackschichtkanten vernachlässigen.

Als Haftvermittler kann ein Material verwendet werden, das dem zwischen Kunststoffträger und Lackschicht eventuell schon vorhandenen Haftvermittler entspricht. Es können jedoch auch andere Haftvermittlersysteme verwendet werden.

Da es auf die Qualität dieser Beschichtung hinsichtlich Optik, Blasenfreiheit, Gleichmäßigkeit usw. nicht in dem Maß wie bei der Erstlackierung ankommt, können relativ preiswerte Primersysteme zum Einsatz kommen. Außerdem kann der Primer durch kostengünstige Applikationsmethoden auf das Bauteil aufgebracht werden, z. B. durch Fluten, Tauchen, Sprühen, Streichen, Spritzen und andere Verfahren. Durch den Einsatz von wasserverdünnbaren Systemen können diese Vorbehandlungen auch entsprechend umweltfreundlich ausgeführt werden. Auch elektrostatisch aufgetragene Pulvergrundierungen kommen in Betracht.

## Patentansprüche

1. Verfahren zur Vorbehandlung von zur Recyclierung vorgesehenen lackierten Kunststoffteilen aus einem unpolaren Kunststoff, deren Lackschicht beispielsweise nach Vorbehandlung des Trägerkunststoffmaterials durch Beflammen, Korona-Entladung, Plasmavorbehandlung oder durch Aufbringen einer Haftvermittlerschicht auf diesem Kunststoffteil haftet, **dadurch gekennzeichnet**, daß die polare und somit als solche nicht auf dem Trägerkunststoffmaterial haftende Oberfläche der Lackschicht unpolarer und damit haftfähig für das Trägerkunststoffmaterial gemacht wird, indem auf die polare Oberfläche der Lackschicht eine Haftvermittlerschicht aufgebracht wird, die einerseits auf der Lackschicht haftet und andererseits in der Lage ist, auf dem Trägerkunststoffmaterial zu haften.

2. Verfahren nach Anspruch 1, dadurch gekennzeichnet, daß auf die Lackschicht ein dem zwischen Lackschicht und Trägerkunststoff angeordneten Haftvermittler (Primer) entsprechender Haftvermittler aufgebracht wird.

3. Verfahren nach Anspruch 1 oder Anspruch 2, dadurch gekennzeichnet, daß der Haftvermittler durch Tauchen auf die Lackschicht aufgebracht wird.

4. Verfahren nach Anspruch 1 oder Anspruch 2, dadurch gekennzeichnet, daß der Haftvermittler durch Fluten auf die Lackschicht aufgebracht wird.

5. Verfahren nach Anspruch 1 oder Anspruch 2, dadurch gekennzeichnet, daß der Haftvermittler durch Sprühen auf die Lackschicht aufgebracht wird.

6. Verfahren nach Anspruch 1 oder Anspruch 2, dadurch gekennzeichnet, daß der Haftvermittler durch Streichen auf die Lackschicht aufgebracht wird.

7. Verfahren nach Anspruch 1 oder Anspruch 2, dadurch gekennzeichnet, daß der Haftvermittler durch Spritzen auf die Lackschicht aufgebracht wird.

8. Verfahren nach Anspruch 1 oder Anspruch 2, dadurch gekennzeichnet, daß der Haftvermittler in Form einer Pulvergrundierung elektrostatisch auf die Lackoberfläche aufgebracht wird.

## Claims

1. A process for pretreating painted plastics parts which are intended for recycling, comprising a nonpolar plastics material, the layer of paint on the plastics part adhering to the plastics part for example after pretreatment of the carrier plastics material by flame treatment, corona discharge, plasma pretreatment or by applying a primer layer to said plastics part, characterised in that the surface of the layer of paint, which is polar and which therefore as such does not adhere to the carrier plastics material is rendered nonpolar and thus adhesive for the carrier plastics material by a primer layer being applied to the polar surface of the paint layer, which primer layer on the one hand adheres to the paint layer and on the other hand is capable of adhering to the carrier plastics material.

2. A process according to claim 1 characterised in that a primer corresponding to the primer arranged between the paint layer and the carrier plastics material is applied to the paint layer.

3. A process according to claim 1 or claim 2 characterised in that the primer is applied to the paint layer by dipping.

4. A process according to claim 1 or claim 2 characterised in that the primer is applied to the paint layer by pouring thereon.

5. A process according to claim 1 or claim 2 characterised in that the primer is applied to the paint layer by spraying.

6. A process according to claim 1 or claim 2 characterised in that the primer is applied to the paint layer by brushing.

7. A process according to claim 1 or claim 2 characterised in that the primer is applied to the paint layer by atomisation.

8. A process according to claim 1 or claim 2 characterised in that the primer is applied to the paint surface electrostatically in the form of a powder primer.

## Revendications

1. Procédé de prétraitement de pièces de plastique laquées prévues pour être recyclées, pièces en plastique non polaire dont la couche de laque peut adhérer suite, par exemple, à un prétraitement du support de matériau plastique au moyen de flambage, de décharge "Corona", de préparation au plasma, ou suite à la mise en place d'une couche intermédiaire adhésive adhérant à cette pièce plastique, caractérisé en ce que la couche superficielle polaire de la couche de laque, donc non adhérente en tant que telle au support de matériau plastique, est rendue non polaire, donc apte à adhérer au support de matériau plastique, grâce à l'apport d'une couche intermédiaire adhésive sur la couche superficielle polaire de la couche de laque, cette couche intermédiaire adhérant d'une part à la couche de laque et ayant d'autre part la possibilité d'adhérer au support de matériau plastique.

2. Procédé selon la revendication 1, caractérisé en ce que l'on apporte sur la couche de laque un intermédiaire adhésif correspondant à l'intermédiaire adhésif (couche d'apprêt) disposé entre la couche de laque et le support de plastique.

3. Procédé selon la revendication 1 ou 2, caractérisé en ce que l'intermédiaire adhésif est apporté sur la couche de laque par immersion.

4. Procédé selon la revendication 1 ou 2, caractérisé en ce que l'intermédiaire adhésif est apporté sur la couche de laque par épandage.

5. Procédé selon la revendication 1 ou 2, caractérisé en ce que l'intermédiaire adhésif est apporté sur la couche de laque par vaporisation.

6. Procédé selon la revendication 1 ou 2, caractérisé en ce que l'intermédiaire adhésif est apporté sur la couche de laque par badigeonnage.

7. Procédé selon la revendication 1 ou 2, caractérisé en ce que l'intermédiaire adhésif est apporté sur la couche de laque par aspersion.

8. Procédé selon la revendication 1 ou 2, caractérisé en ce que l'intermédiaire adhésif est apporté sur la surface de la laque électrostatiquement sous forme d'une couche de poudre.
